(19) Europäisches Patentamt

European Patent Office

Office européen des brevets

(11) Veröffentlichungsnummer : **0 310 879 B1**

## (12) EUROPÄISCHE PATENTSCHRIFT

(45) Veröffentlichungstag der Patentschrift :
24.07.91 Patentblatt 91/30

(51) Int. Cl.⁵ : **B60K 15/03**

(21) Anmeldenummer : 88115624.4

(22) Anmeldetag : 23.09.88

(54) Kraftstoffbehälteranordnung für Kraftfahrzeuge, insbesondere Personenkraftwagen.

(30) Priorität : 03.10.87 DE 3733503

(43) Veröffentlichungstag der Anmeldung :
12.04.89 Patentblatt 89/15

(45) Bekanntmachung des Hinweises auf die
Patenterteilung :
24.07.91 Patentblatt 91/30

(84) Benannte Vertragsstaaten :
DE ES FR GB IT SE

(56) Entgegenhaltungen :
EP-A- 0 041 876
EP-A- 0 077 697
DE-A- 2 125 829
FR-A- 1 180 381
FR-A- 2 523 076

(73) Patentinhaber : Bayerische Motoren Werke
Aktiengesellschaft
Patentabteilung AJ-3 Postfach 40 02 40
Petuelring 130
W-8000 München 40 (DE)

(72) Erfinder : Niklas, Johann, Ing. grad.
Klaus-Bergmann-Weg 7
W-8048 Haimhausen (DE)
Erfinder : Langner, Wilfried, Ing. grad.
Bunsenstrasse 14
W-8000 München 83 (DE)
Erfinder : Pregl, Alexander, Dipl.-Ing.
Lauthstrasse 14
W-8000 München 50 (DE)

(74) Vertreter : Draeger, Karlfried et al
Bayerische Motoren Werke
Aktiengesellschaft Postfach 40 02 40
Petuelring 130 - AJ 36
W-8000 München 40 (DE)

## Beschreibung

Die Erfindung betrifft eine Kraftstoffbehälteranordnung für Kraftfahrzeuge, insbesondere Personenkraftwagen, nach dem Oberbegriff des Patentanspruchs 1.

Bei einer bekannten Kraftstoffbehälteranordnung dieser Art (EP-A-41 876) weist der an der Unterseite des Fahrzeughecks angeordnete Kraftstoffbehälter aus Kunststoff an seiner Vorderseite, die sich in einer senkrechten Fahrzeugquerebene erstreckt, zwei mit seitlichem Abstand voneinander angeordnete verhältnismäßig kurze kegelstumpfförmige Vorsprünge auf, die sich nach vorne zu verjüngen, in entsprechende Öffnungen mit umgebördelten Rändern eines Querträgers des Fahrzeugaufbaus eingreifen und mit ihren Kegelflächen an den umgebördelten Rändern anliegen. Dabei ist zwischen der Vorderseite des Kraftstoffbehälters und dem Querträger ein Abstand vorhanden. Im hinteren Bereich ist der Kraftstoffbehälter mit seitlichen Flanschen versehen, über die er an unteren waagerechten Flanschen zweier Längsträger des Fahrzeugaufbaus mit L-förmigem Querschnitt, zwischen denen der Kraftstoffbehälter angeordnet ist, befestigt werden kann. Der Befestigung dienen zwei Schrauben, die durch Bohrungen in den Flanschen des Kraftstoffbehälters und der Längsträger hindurch ragen. Diese bekannte Kraftstoffbehälteranordnung erfordert eine exakte Fertigung mit geringen Fertigungstoleranzen, damit der Kraftstoffbehälter ohne Spiel unter Spannung an dem Fahrzeugaufbau gehalten werden kann. Die Montage des Kraftstoffbehälters an dem Fahrzeugaufbau erfordert erhebliche Aufmerksamkeit. Bei einer Heckkollision ist der Kraftstoffbehälter relativ gefährdet.

Bei einer anderen bekannten Kraftstoffbehälteranordnung (EP-A-77 697) weist ein Kraftstoffbehälter aus Kunststoff an seiner Vorderseite und an seiner Rückseite jeweils mit seitlichem Abstand voneinander angeordnete flanschartige Ansätze auf, von denen die vorderen gebogen ausgebildet und in geschlitzte Aufnahmeklammern aus Kunststoff, die an einem Querträger des Fahrzeugaufbaus befestigt sind, geschoben sind, während die hinteren Ansätze, die mit sich in Fahrzeugquerrichtung erstreckenden Langlöchern versehen sind, einer Schraubbefestigung an dem Fahrzeugaufbau dienen. Auch bei dieser bekannten Kraftstoffbehälteranordnung erfordert die Montage erhebliche Aufmerksamkeit und Geschick. Bei einer Heckkollision ist der Kraftstoffbehälter relativ gefährdet.

Es ist ferner bekannt, einen Kraftstoffbehälter oberhalb der Fahrzeughinterachse verhältnismäßig geschützt anzuordnen (z.B. DE-A-21 25 829, DE-Zeitschrift Mot 1986, Nr. 6, Seiten 122 bis 127).

Der Erfindung liegt die Aufgabe zugrunde, eine Kraftstoffbehälteranordnung der eingangs genannten Art zu schaffen, die den vielfältigen Anforderungen an eine derartige Anordnung möglichst weitgehend gerecht wird, insbesondere bei sicherer Anordnung des Kraftstoffbehälters mit einfachen Mitteln einen einwandfreien Halt des Kraftstoffbehälters und dessen einfache Montage gewährleistet. Darüber hinaus soll eine geringe Gefährdung bei einem Heckaufprall gegeben sein.

Die Lösung dieser Aufgabe ist in dem kennzeichnenden Teil des Patentanspruchs 1 angegeben. Durch sie wird erreicht, daß erhebliche Fertigungstoleranzen sowohl bei dem Kraftstoffbehälter als auch bei den Gegenlagern an dem Fahrzeugaufbau akzeptiert werden können sowie eine einfache Montage und ein sicherer Halt des Kraftstoffbehälters bei großflächiger Abstützung erzielt werden.

Vorteilhafte Ausgestaltungen der Erfindung sind in den Unteransprüchen gekennzeichnet.

In der Zeichnung ist ein Ausführungsbeispiel der Erfindung schematisch dargestellt, und zwar zeigt

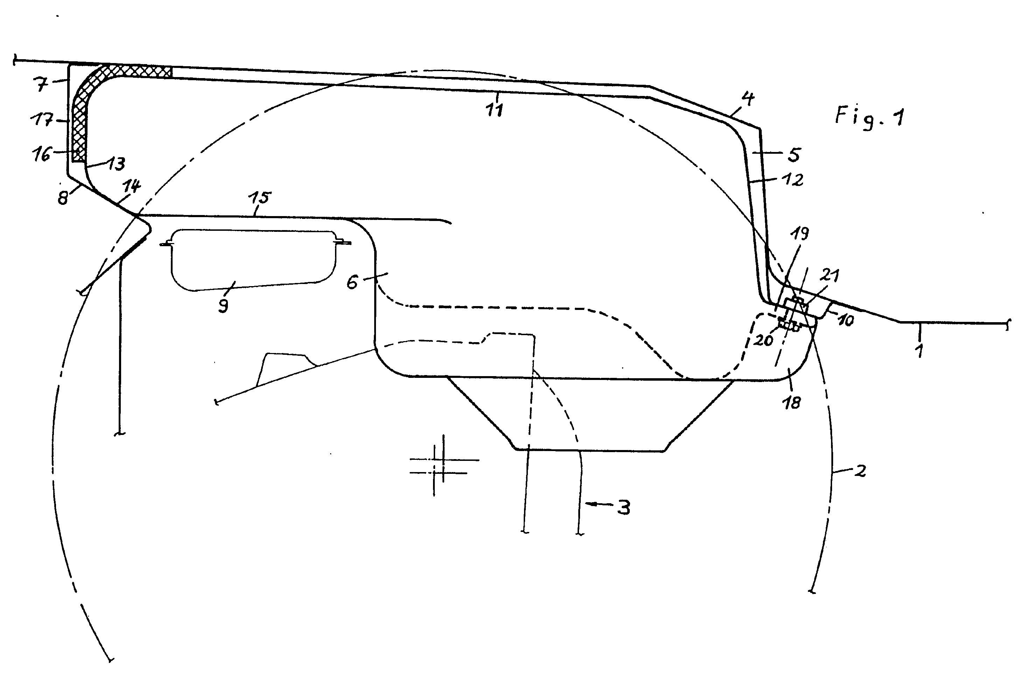

Fig. 1     einen Teil des hinteren Bereichs eines Personenkraftwagens mit Kraftstoffbehälter in einem lotrechten Längsschnitt und

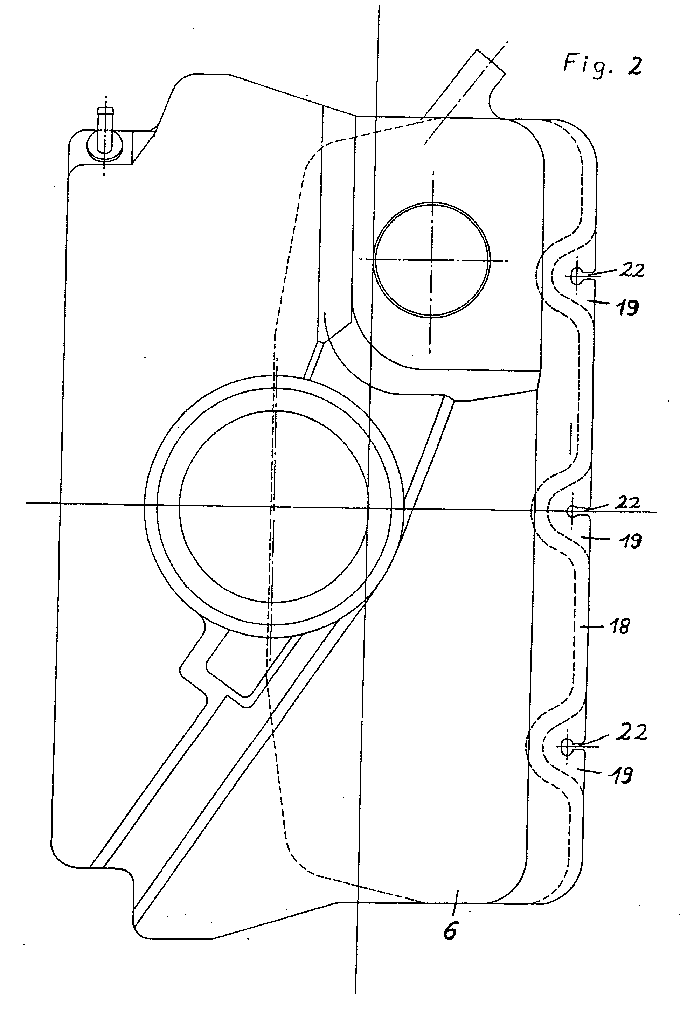

Fig. 2     den Kraftstoffbehälter nach Fig. 1 in Draufsicht.

Der nicht weiter dargestellte Personenkraftwagen weist einen Fahrzeugaufbau 1 und Fahrzeughinterräder 2 auf. An dem Fahrzeugaufbau 1 ist oberhalb einer Fahrzeughinterachse 3 unterhalb eines Fahrzeugbodens 4 ein nach unten offener Kraftstoffbehälterraum 5 für die Aufnahme eines Kraftstoffbehälters 6 aus Kunststoff vorgesehen.

Am vorderen Ende ist der Kraftstoffbehälterraum 5 durch eine sich in Fahrzeugquerrichtung erstreckende Stützwand 7 abgeschlossen. Diese verläuft in ihrem oberen Bereich im Anschluß an den Fahrzeugboden 4 zumindest annähernd in senkrechter Richtung. In einigem Abstand von dem Fahrzeugboden 4 ist die Stützwand 7 nach hinten abgewinkelt und verläuft unter einem Winkel von etwa 30° gegenüber der Waagerechten geneigt. Mit diesem geneigten Wandteil bildet die Stützwand 7 eine schräg von hinten nach vorne ansteigende, sich annähernd über die gesamte Fahrzeugbreite erstreckende Auflagerwand 8, die zumindest annähernd eben ausgebildet ist. Am hinteren Ende der Auflagewand 8 ist die Stützwand 7 nach vorne abgewinkelt, so daß sie unter einem Winkel von etwa 45° gegenüber der Waagerechten geneigt von der Auflagerwand 8 aus schräg nach vorne und unten verläuft. Mit verhältnismäßig geringem Abstand hinter dem schräg nach vorne und unten verlaufenden Teil der Stützwand 7 ist oberhalb der Fahrzeughinterachse 3 ein Fahrzeugquerträger

2

9 angeordnet. Am hinteren Ende des Kraftstoffbehälterraums 5 sind drei mit seitlichem Abstand voneinander angeordnete nach unten ragende Lagerböcke 10 an dem Fahrzeugaufbau 1 angeordnet.

Der Kraftstoffbehälter 6, der sich zwischen Fahrzeuglängswänden annähernd über die gesamte Fahrzeugbreite erstreckt, ist in seinem vorderen Bereich niedriger als in seinem hinteren Bereich ausgebildet, der in dem Bereich der größten senkrechten Erstreckung etwa dreimal so hoch ist wie der vordere Bereich. Die obere Wand 11 und eine Rückwand 12 des Kraftstoffbehälters 6 weisen jeweils einen Abstand von dem Fahrzeugboden 4 auf. Die im wesentlichen eben ausgebildete obere Wand 11 des Kraftstoffbehälters 6 verläuft an ihrem vorderen Ende in einem Bogen nach unten und geht in eine Vorderwand 13 des Kraftstoffbehälters 6 über, die mit Abstand von dem senkrechten Teil der Stützwand 7 etwa senkrecht verläuft. An ihrem unteren Ende verläuft die Vorderwand 13 des Kraftstoffbehälters 6 in einem nach hinten gerichteten Bogen und geht in eine zumindest annähernd eben ausgebildete Lagerwand 14 über, die um einen Winkel von etwa 30° zur Waagerechten geneigt schräg von vorne nach hinten und unten geneigt verläuft und in einem nach hinten gerichteten Bogen in eine waagerecht verlaufende Bodenwand 15 des vorderen Bereichs des Kraftstoffbehälters 6 übergeht. Der vordere Bereich der oberen Wand 11 und die Lagerwand 14 bilden demgemäß einen sich nach vorne verjüngenden Keil.

Auf der oberen Wand 11 ist in dem vorderen Wandbereich ein Band 16 aus elastischem Werkstoff, z.B. Gummi, angeordnet, das bis etwa zu dem unteren Ende der Vorderwand 13 reicht. Die obere Seite des Bandes 16 liegt an der Unterseite des Fahrzeugbodens 4 an. Zwischen der Vorderseite des Bandes 16 und dem senkrechten Teil der Stützwand 7 ist ein Abstand 17 vorhanden.

Im hinteren Bereich ist der Kraftstoffbehälter 6 gestuft ausgebildet. Unterhalb der Rückwand 12 des Kraftstoffbehälters 6 weist dieser einen nach hinten ragenden Behälterteil 18 auf, dessen im wesentlichen eben ausgebildete Oberseite etwa zwei Drittel der Maximalhöhe des Kraftstoffbehälters 6 von dessen oberer Wand 11 entfernt angeordnet ist. Der Behälterteil 18 erstreckt sich über die gesamte Breite des Kraftstoffbehälters 6 und liegt mit seiner Oberseite an den Unterseiten der Lagerböcke 10 an. In deren Bereichen ist der Behälterteil 18 nach vorne eingezogen ausgebildet, so daß drei mit seitlichem Abstand voneinander angeordnete Befestigungsflansche 19 gebildet sind. Diese sind durch Befestigungsschrauben 20 mit Schraubenmuttern 21 an den Lagerböcken 10 gehalten. Die Befestigungsschrauben 20 greifen durch nach hinten offene Schlitze 22 in den Befestigungsflanschen 19, von denen die beiden äußeren Erweiterungen in Fahrzeugquerrichtung zum seitlichen Toleranzausgleich aufweisen.

Zum Einbau des Kraftstoffbehälters 6 wird dieser schräg von hinten und unten nach vorne in den Kraftstoffbehälterraum 5 geschoben. Dabei legt sich die Oberseite des Bandes 16 gegen die Unterseite des Fahrzeugbodens 4 und die Unterseite der Lagerwand 14 gegen die Oberseite der Auflagerwand 8. Unter elastischer Verformung des auf der oberen Wand 11 des Kraftstoffbehälters 6 angeordneten Teiles des Bandes 16 ergibt sich bei Wahrung des Abstandes 17 vor dem an der Vorderwand 13 des Kraftstoffbehälters 6 angeordneten Teiles des Bandes 16 unter der Wirkung der nach vorne aufeinander zu geneigt verlaufenden Keilflächen eine über die gesamte Breite des Kraftstoffbehälters 6 reichende elastisch-feste Einspannung an dem vorderen Ende des Kraftstoffbehälters 6. In dieser Lage wird der Kraftstoffbehälter 6 mit leichtem Druck nach vorne gehalten und sodann der Befestigungsflansch 19 an dem Fahrzeugaufbau 1 mit Hilfe der Befestigungsschrauben 20 befestigt.

Die Erfindung ermöglicht demgemäß bei Anordnung des Kraftstoffbehälters im geschützten Bereich über der Fahrzeughinterachse unter dem Fahrzeugboden eine einfache Montage. Dabei können Fertigungstoleranzen und sich während des Betriebs ergebende Verformungen, z.B. ein sogenanntes Quellen des Kraftstoffbehälters, durch die Steckverbindung ausgeglichen und dennoch eine exakte Fixierung der Einbaulage erreicht werden. Dabei ermöglicht das elastische Element an dem vorderen Ende des Kraftstoffbehälters ein Ausgleichen selbst großer Toleranzen. Darüber hinaus gewährleistet dieses elastische Element, daß der Kraftstoffbehälter an seinem vorderen Ende stets nachgiebig in einer Klemmhalterung sicher und spielfrei gehalten ist. Zudem bewirkt das elastische Element bei dem Einbau des Kraftstoffbehälters einen Schutz des vorderen Behälterteils.

Bei einem Heckaufprall, bei dem der Fahrzeugaufbau verformt wird, wird der Kraftstoffbehälter 6 nach vorne geschoben und legt sich mit dem vor der Vorderwand 13 des Kraftstoffbehälters 6 angeordneten Teil des Bandes 16 gegen den senkrechten Teil der Stützwand 7. Dadurch wird ein elastisches Auffangen des Kraftstoffbehälters 6 erreicht und ein Zusammendrücken der Wände des Kraftstoffbehälters 6 in der Keilverbindung begrenzt. Bei starker Verformung des Fahrzeugaufbaus 1 wird sich auch der Kraftstoffbehälter 6 verformen. Dabei können sich die Befestigungsflansche 19 dank der nach hinten offenen Schlitze von den Befestigungsschrauben 20 lösen. Dadurch wird verhindert, daß die Wand des Kraftstoffbehälters 6 bei einer derartigen Verformung reißt.

Mit der Erfindung wird somit eine Kraftstoffbehälteranordnung geschaffen, bei der sowohl Fertigungs- als auch Betriebstoleranzen ausgeglichen werden, eine leichte Montage und Demontage möglich ist und außer-

3

dem Sicherheitsaspekte berücksichtigt werden. Sie ist insbesondere für sportliche zweisitzige Fahrzeuge geeignet.

Bezugszeichenliste

1 Fahrzeugaufbau
2 Fahrzeughinterrad
3 Fahrzeughinterachse
4 Fahrzeugboden
5 Kraftstoffbehälterraum
6 Kraftstoffbehälter
7 Stützwand
8 Auflagerwand
9 Fahrzeugquerträger
10 Lagerbock
11 obere Wand
12 Rückwand
13 Vorderwand
14 Lagerwand
15 Bodenwand
16 Band
17 Abstand
18 Behälterteil
19 Befestigungsflansch
20 Befestigungsschraube
21 Schraubenmutter
22 Schlitz

**Patentansprüche**

1. Kraftstoffbehälteranordnung für Kraftfahrzeuge, mit einem Kraftstoffbehälter, der in seinem, in Fahrtrichtung, vorderen Bereich nach vorne konvergierende Wandbereiche, die zur Bildung einer Klemmhalterung unter auf den Kraftstoffbehälter nach vorne wirkender Andrückkraft an entsprechend geformten Wandbereichen des Fahrzeugaufbaus anliegen, und in seinem hinteren Bereich wenigstens einen Befestigungsflansch für eine kraftschlüssige Schraubbefestigung an dem Fahrzeugaufbau aufweist, **dadurch gekennzeichnet,** daß die konvergierenden Wandbereiche des Kraftstoffbehälters (6) und die entsprechend geformten Wandbereiche des Fahrzeugaufbaus (1) sich im wesentlichen über die gesamte Breite des vorderen Bereichs des Kraftstoffbehälters (6) durchlaufend erstrecken.

2. Kraftstoffbehälteranordnung nach Anspruch 1, dadurch gekennzeichnet, daß zwischen wenigstens einem der konvergierenden Wandbereiche des Kraftstoffbehälters (6) und dem Fahrzeugaufbau (1) eine elastische Zwischenlage (Band 16) angeordnet ist.

3. Kraftstoffbehälteranordnung nach Anspruch 2, dadurch gekennzeichnet, daß die elastische Zwischenlage (Band 16) an der Oberseite des Kraftstoffbehälters (6) angeordnet ist.

4. Kraftstoffbehälteranordnung nach Anspruch 3, dadurch gekennzeichnet, daß die elastische Zwischenlage (Band 16) nach vorne bis über die Vorderseite des Kraftstoffbehälters (6) reicht.

5. Kraftstoffbehälteranordnung nach einem der Ansprüche 1 bis 4, dadurch gekennzeichnet, daß an dem wenigstens einen Befestigungsflansch (19) in dem hinteren Bereich des Kraftstoffbehälters (6) nach hinten offene Schlitze für die Aufnahme der Befestigungsschrauben (20) vorgesehen sind.

6. Kraftstoffbehälteranordnung nach Anspruch 5, dadurch gekennzeichnet, daß ein Befestigungsflansch sich zumindest annähernd über die gesamte Breite des hinteren Bereichs des Kraftstoffbehälters (6) erstreckt.

7. Kraftstoffbehälteranordnung nach Anspruch 5, dadurch gekennzeichnet, daß mehrere Befestigungsflansche (19) mit seitlichem Abstand voneinander zumindest annähernd über die gesamte Breite des hinteren Bereichs des Kraftstoffbehälters (6) verteilt angeordnet sind.

8. Kraftstoffbehälteranordnung nach einem der vorhergehenden Ansprüche, gekennzeichnet durch eine Anordnung des Kraftstoffbehälters (6) über der Fahrzeughinterachse (3).

## Claims

1. A fuel tank arrangement for motor vehicles, especially passenger vehicles, comprising a fuel tank which, in its front region in the direction of travel, has forwardly converging wall surfaces which form a clamping holder by abutting against correspondingly-shaped wall regions of the vehicle body, exerting compressive forward forces on the fuel tank, whereas the rear region of the tank has at least one securing flange for a non-positive screw connection to the vehicle body, characterised in that the converging wall regions of the fuel tank (6) and the correspondingly-shaped wall regions of the vehicle body (1) extend continuously over substantially the entire width of the front region of the fuel tank (6).

2. A fuel tank arrangement according to claim 1, characterised in that an elastic intermediate layer (belt 16) is disposed between the vehicle body (1) and at least one of the converging wall regions of the fuel tank (6).

3. A fuel tank arrangement according to claim 2, characterised in that the elastic intermediate layer (belt 16) is disposed on the top of the fuel tank (6).

4. A fuel tank arrangement according to claim 3, characterised in that the elastic intermediate layer (belt 16) extends forwards to over the front of the fuel tank (6).

5. A fuel tank arrangement according to any of claims 1 to 4, characterised in that rearwardly-open slots for holding the securing screws (20) are provided on at least one securing flange (19) in the rear region of the fuel tank (6).

6. A fuel tank arrangement according to claim 5, characterised in that a securing flange extends at least approximately over the entire width of the rear region of the fuel tank (6).

7. A fuel tank arrangement according to claim 5, characterised in that a number of laterally-spaced securing flanges (19) are distributed at least approximately over the entire width of the rear region of the fuel tank (6).

8. A fuel tank arrangement according to any of the preceding claims, characterised by an arrangement of the fuel tank (6) over the rear axle (3) of the vehicle.

## Revendications

1. Disposition de réservoir de carburant pour véhicules automobiles, notamment de véhicules de transport de personnes, avec un réservoir de carburant qui comporte, sur sa partie tournée vers l'avant dans le sens de la marche, des zones de paroi convergentes qui, pour réaliser une fixation par coincement sous l'effet d'un effort de poussée agissant vers l'avant sur le réservoir de carburant, s'appliquent contre des zones de paroi, conformées de façon correspondante, de la carrosserie du véhicule, tandis que sur sa partie arrière, ce réservoir de carburant comporte au moins une bride de fixation pour sa fixation par adhérence, à l'aide de boulons, sur la carrosserie du véhicule, disposition de réservoir de carburant caractérisée en ce que les zones de paroi convergentes du réservoir de carburant (6) et les zones de paroi, conformées de façon correspondante, de la carrosserie (1) du véhicule, s'étendent essentiellement de façon continue sur toute la largeur de la zone antérieure du réservoir de carburant (6).

2. Disposition de réservoir de carburant selon la revendication 1, caractérisée en ce qu'une couche intermédiaire élastique (bande 16) est disposée entre au moins une des zones de paroi convergentes du réservoir de carburant (6) et de la carrosserie (1) du véhicule.

3. Disposition de réservoir de carburant selon la revendication 2, caractérisée en ce que la couche intermédiaire élastique (bande 16) est disposée sur la face supérieure du réservoir de carburant (6).

4. Disposition de réservoir de carburant selon la revendication 3, caractérisée en ce que la couche élastique intermédiaire (bande 16) s'étend vers l'avant jusque sur la face antérieure du réservoir de carburant (6).

5. Disposition de réservoir de carburant selon une des revendications 1 à 4, caractérisée en ce qu'il est prévu, sur au moins l'une des brides de fixation (19) dans la zone arrière du réservoir de carburant (6), des fentes ouvertes vers l'arrière pour recevoir des boulons de fixation (20).

6. Disposition de réservoir de carburant selon la revendication 5, caractérisée en ce qu'une bride de fixation s'étend, tout au moins approximativement, sur toute la largeur de la zone arrière du réservoir de carburant (6).

7. Disposition de réservoir de carburant selon la revendication 5, caractérisée en ce que plusieurs brides de fixation (19), à intervalles latéraux les uns des autres, sont réparties sur au moins approximativement, toute la largeur de la zone arrière du réservoir de carburant.

8. Disposition de réservoir de carburant selon une des précédentes revendications, caractérisée en ce que le réservoir de carburant (6) est disposé au-dessus de l'essieu arrière (3) du véhicule.

Fig. 1

EP 0 310 879 B1

Fig. 2

22
19
22
19
18
22
19
6